# FASCICULE DE BREVET EUROPEEN

(11) **EP 2 564 491 B1**
(45) Date de publication et mention de la délivrance du brevet: **06.09.2017**
(21) Numéro de dépôt: 11723501.0
(22) Date de dépôt: 22.04.2011
(51) Int. Cl.: H02K 1/16, H02K 23/40, H02K 23/58, H02K 1/17, H02K 23/26

(54) **MACHINE ELECTRIQUE TOURNANTE EN PARTICULIER POUR UN DEMARREUR DE VEHICULE AUTOMOBILE**
ELEKTRISCHE DREHMASCHINE, INSBESONDERE FÜR EINEN KRAFTFAHRZEUGANLASSER
ROTATING ELECTRIC MACHINE IN PARTICULAR FOR A MOTOR VEHICLE STARTER

(30) Priorité: 27.04.2010 FR 1053224
(43) Date de publication de la demande: 06.03.2013
(73) Titulaire: Valeo Equipements Electriques Moteur, 94046 Créteil Cedex (FR)
(72) Inventeur: LABBE, Nicolas, F-69003 Lyon (FR); TESSON, Philippe, F-13000 Marseille (FR); DUPEUX, Benoit, F-38690 Oyeu (FR); VAUQUELIN, Aurélien, F-60200 Complégne (FR); VILAIN, Jean-Paul, F-60150 Melicocq (FR)
(86) Numéro de dépôt international: PCT/FR2011/050938
(87) Numéro de publication internationale: WO 2011/135244

(56) Documents cités:
- CH-A5- 620 551
- FR-A1- 2 910 192
- JP-A- 63 023 523
- US-A- 4 386 291
- US-A- 5 536 985
- US-A1- 2006 125 345

## Description

### DOMAINE DE L'INVENTION

L'invention concerne une machine électrique tournante dont les caractéristiques de fonctionnement ont été optimisées. L'invention trouve une application particulièrement avantageuse dans le domaine des démarreurs de véhicule automobile.

### ETAT DE LA TECHNIQUE

On connaît des démarreurs de véhicule automobile mettant en oeuvre des machines électriques munies d'un stator, ou inducteur, constitué d'une culasse et d'une structure aimantée à plusieurs aimants permanents réalisés généralement en ferrite.

La machine comporte également un rotor, ou induit, comprenant des conducteurs formant le bobinage du rotor. A cet effet dans un mode de réalisation, le rotor comprenant un noyau formé de tôles feuilletées présente des encoches longitudinales séparées par des dents, les conducteurs en forme de U étant enfilés à l'intérieur de ces encoches sur deux couches distinctes : une couche inférieure et une couche supérieure. Le noyau, constituant le corps du rotor, est solidaire d'un arbre métallique.

On sait que dans un tel système les pertes fer sont liées à la variation du champ magnétique dans les parties tournantes, en particulier dans les dents rotoriques où le niveau d'induction et de saturation est très important. Dans le document US 2006/0125345, conforme au préambule de la revendication 1, on limite ces pertes de fer en dotant le noyau du rotor d'une pluralité de dents en matière non magnétique pour éliminer les bruits et les vibrations. Dans le document US 5536985 on élimine le noyau en tôles feuilletées et on remplace celui-ci par un noyau composite comportant une pluralité de particules magnétiques reliées par un liant non magnétique.

Il est souhaitable d'avoir un bon couplage magnétique entre l'inducteur et l'induit de la machine électrique tournante, sans que l'induction ne soit trop élevée dans les zones où il peut y avoir des pertes de fer lors de la rotation de l'induit.

### OBJET DE L'INVENTION

Pour répondre à ces souhaits, on réalise un rotor partiellement en matière plastique. Ainsi le rotor pourra présenter un corps réalisé en deux parties à savoir une partie interne sous la forme d'un paquet de tôles et une partie externe en matière plastique selon les revendications indépendantes. On appréciera que la partie interne permet le passage du flux magnétique engendré par la structure aimantée.

Pour compenser la diminution du couple moteur qui résulte de la suppression de la matière ferromagnétique à l'induit, on pourra remplacer les aimants ferrites habituellement utilisés pour former le stator inducteur par des aimants réalisés en NdFeB frittés. Cela va permettre de réduire l'épaisseur des aimants du stator et de ce fait, pour un même diamètre de stator, d'augmenter le diamètre du rotor pour pouvoir positionner facilement tous les conducteurs à la périphérie du rotor sur une même couche.

On pourra également utiliser un stator muni d'une structure d'aimants permanent de type Halbach modifiée présentant des portions radiales augmentées. Suivant cette structure, on conserve les dimensions de la culasse d'un stator classique et on adapte les aimants en divisant sensiblement par 2 environ leur épaisseur. Il en résulte un effet Halbach localisé permettant d'assurer une transition magnétique d'un pôle à un autre pour concentrer l'énergie magnétique de l'inducteur auquel se superpose un système d'aimantation radiale qui permet d'optimiser le passage de flux vers les conducteurs du rotor.

On pourra aussi utiliser un inducteur de type Halbach partiel complété par des pièces d'acier interpolaires permettant d'augmenter l'inductance d'induit.

L'invention permet ainsi notamment :
- l'augmentation du rendement de la machine électrique par diminution des pertes fer (courants de Foucault, hystérésis), et la quasi-annulation des pertes par commutation puisque l'inductance d'induit est fortement réduite;
- la facilitation du procédé de fabrication du rotor puisqu'il il n'y a plus de préoccupation d'isolation électrique entre les conducteurs et les tôles du rotor reliées à la masse ;
- l'amélioration de la performance en tension à l'appel de courant du fait de la moindre inertie en rotation. Cela constitue une préoccupation majeure pour la technologie de « stop and start » dans laquelle le moteur est arrêté au feu rouge pour ensuite être redémarré ;
- la suppression du bruit magnétique, étant donné que les bords de pôles de l'inducteur ne peuvent plus être soumis à une alternance de réluctance dents-encoches au cours de la rotation de l'induit ;
- la suppression de toute saturation magnétique liée à l'induit (saturation liée, de façon classique, aux dents en acier qui séparent les encoches).

L'invention concerne donc une machine électrique tournante selon l'objet des revendications indépendantes 1, 2 ou 3.

Selon une réalisation, le corps du rotor est réalisé en matière plastique dans la région des dents qui séparent les encoches près de l'entrefer, à la périphérie externe du rotor.

Selon une réalisation, le corps présente à sa périphérie interne un trou avec une saillie, une protubérance associée à l'arbre en métal pénétrant de manière complémentaire dans la saillie.

Selon une réalisation, cette protubérance est une clavette intervenant entre une creusure réalisée à la périphérie externe de l'arbre et la saillie ou appartenant à l'arbre.

Dans une forme de réalisation le paquet de tôles comporte à sa périphérie externe des moyens d'ancrage, tels que des cannelures, pour retenir la partie externe en matière plastique.

Selon une réalisation, le paquet de tôles comporte à sa périphérie externe des protubérances, telles que des cannelures, pour retenir la partie externe en plastique.

Selon un mode de réalisation le paquet de tôles comporte à sa périphérie externe des évidements, telles que des encoches semi-fermées, pour retenir la partie externe en plastique.

Selon une réalisation, la partie externe en matière plastique présente à chacune de ses extrémités axiales un rebord dirigé vers l'intérieur en direction de l'axe du rotor, le paquet de tôles étant pris en sandwich entre les rebords en sorte que la partie est bloquée axialement par le paquet de tôles formant entretoise entre les rebords.

Selon une réalisation, le rebord est de forme annulaire ou est fractionné.

Selon une réalisation, les conducteurs sont positionnés sur une même couche.

Selon une réalisation, les conducteurs sont noyés dans le plastique du corps du rotor.

Selon une réalisation, les conducteurs présentent une section transversale de forme allongée, par exemple sensiblement rectangulaire.

Selon une réalisation, les sections des conducteurs sont orientées radialement suivant leur grande dimension.

Selon une réalisation, les conducteurs sont positionnés en quinconce à la périphérie du rotor.

Selon une réalisation, les conducteurs sont situés côte à côte le plus loin possible de l'axe de rotation pour matérialiser une nappe de courant à la périphérie externe du rotor.

Selon une réalisation, le plastique utilisé pour la réalisation du rotor est un plastique de type PEEK (polyétheréthercétone).

Selon une réalisation, le stator est constitué d'une culasse de fermeture de flux et d'un ensemble d'aimants permanents réalisés en terre rare ayant une direction d'aimantation radiale.

Selon des modes de réalisation les aimants en terre rare sont à base de Néodyme, fer, bore (NdFeB) ou à base de Samarium Cobalt.

Selon une réalisation, le stator comporte :
- des régions aimantées présentant une aimantation de direction radiale définissant les pôles de la machine,
- des régions de transition magnétique présentant une direction d'aimantation autre que radiale situées entre deux régions d'aimantation radiale,
- les régions d'aimantation radiale occupant une zone radiale plus étendue que les zones radiales occupées par les régions d'aimantation autre que radiale.

Selon une réalisation, entre deux aimants présentant une aimantation radiale consécutifs, les régions d'aimantation autre que radiale sont constituées par :
- un région d'aimantation sensiblement orthoradiale, et
- de part et d'autre de cette région, deux régions ayant une direction d'aimantation différente des directions radiale et orthoradiale, cette direction d'aimantation formant par exemple avec la direction radiale un angle d'environ 45°.

Selon une réalisation, le stator comporte en outre des pièces d'acier interpolaires intercalées radialement entre deux pôles successifs du stator.

Selon une réalisation, les pièces d'acier interpolaires se substituent aux régions d'aimantation orthoradiale.

Selon une réalisation, les pièces d'acier interpolaires présentent une forme parallélépipédique ou une forme d'arche.

L'invention concerne en outre un démarreur équipé d'une machine électrique selon l'invention.

### BREVE DESCRIPTION DES DESSINS

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un démarreur selon l'invention ;
Figure 2: une vue de côté d'un rotor d'une machine selon l'invention réalisé partiellement en plastique ;
Figure 3 : une vue de face d'un rotor d'une machine selon l'invention présentant des encoches sur sa périphérie externe ;
Figure 4 : une vue de face d'un rotor d'une machine selon l'invention dans lequel les conducteurs sont positionnés à sa périphérie sur une seule couche ;
Figure 5 : une vue de face du rotor d'une machine selon l'invention dans lequel les conducteurs positionnés à sa périphérie sont maintenus par une frette ;
Figure 6 : une vue de face d'un rotor d'une machine selon l'invention dans lequel les conducteurs de forme aplatie présentent une orientation radiale ;
Figure 7 : une vue de face d'un rotor d'une machine selon l'invention dans lequel les conducteurs sont positionnés sur deux couches distinctes en quinconce ;
Figures 8a-8b : une vue partielle de la périphérie du rotor de la machine selon l'invention dans lequel les conducteurs présentant une forme **aplatie** sont respectivement positionnés en quinconce ou suivant une direction orthoradiale ;
Figures 9a-9b : des vues de face d'un rotor selon l'invention présentant un noyau en tôles et une partie en plastique surmoulée dans lequel les conducteurs sont noyés dans la partie en plastique sur deux couches ou une seule ;
Figure 10 : une vue schématique de côté du rotor de la machine des Figures 9a-9b ;
Figure 11 : une vue de face du noyau métallique du rotor des Figures 9 et 10 comportant des cannelures à sa périphérie externe ;
Figure 12 : une vue de face d'un stator de la machine selon l'invention à 6 pôles comportant des aimants réalisés en NdFeB ;
Figures 13a-13b : des représentations schématiques respectivement d'un stator comportant une structure aimantée de type Halbach connue et d'un stator selon l'invention comportant une structure Halbach modifiée présentant des régions d'aimantation radiales augmentées ;
Figure 14 : une représentation schématique d'un stator selon l'invention comportant une structure Halbach modifiée comportant des pièces d'acier interpolaires intercalées entre deux pôles successifs de la machine ;
Figure 15 : une représentation schématique d'une variante de la Figure 14 dans laquelle les pièces interpolaires présentent une forme d'arche.

Les éléments identiques, similaires ou analogues conservent les mêmes références d'une figure à l'autre.

### DESCRIPTION D'EXEMPLES DE REALISATION DE L'INVENTION

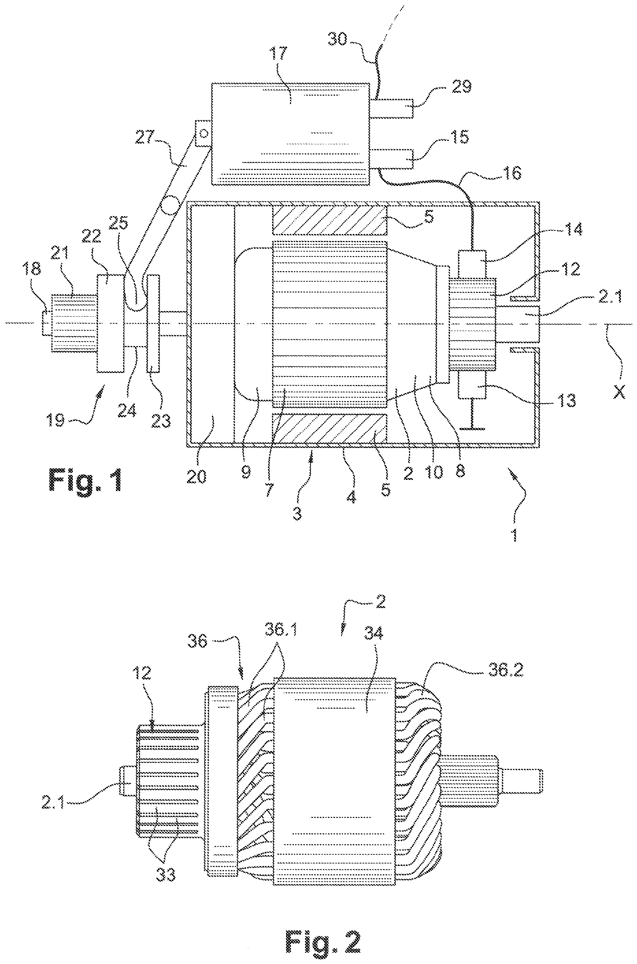

La Figure 1 montre une représentation schématique d'un démarreur 1 pour moteur à combustion de véhicule automobile. Ce démarreur 1 comprend un moteur électrique comportant, d'une part, un rotor 2, encore appelé induit, monté à solidarisation sur un arbre 2.1 métallique d'axe de rotation X, et d'autre part, un stator 3, encore appelé inducteur, installé autour du rotor 2 avec présence d'un entrefer. Ce stator 3 comporte une culasse 4 métallique portant une structure aimantée 5 à aimantation permanente. Le rotor 2, de forme annulaire, comporte un corps de rotor 7 solidaire de l'arbre 2.1 et un bobinage 8 formé par des conducteurs 36 (visibles sur la Figure 2) installés à la périphérie externe du rotor 2.

Dans l'exemple illustré, la machine électrique tournante, formée par le démarreur 1, est de type à six pôles. Le bobinage 8 forme, de part et d'autre du corps de rotor 7, un chignon avant 9 et un chignon arrière 10. Le rotor 2 est pourvu, à l'arrière, d'un collecteur 12 comprenant une pluralité de pièces de contact, ici des lames électriquement conductrices telles que des lames en cuivre, connectées électriquement aux éléments conducteurs, formés dans l'exemple considéré par des fils, du bobinage 8. Les lames du collecteur sont portées par un support en matière plastique solidaire de l'arbre. Le support du collecteur est, pour une bonne tenue en température, en matière plastique thermodurcissable, telle qu'une matière plastique phénolique thermodurcissable par exemple de la bakélite.

Un groupe de balais 13 et 14, ici radiaux, est prévu pour l'alimentation électrique du bobinage 8, l'un des balais 13 étant relié à la masse du démarreur 1 et un autre des balais 14 étant relié à une borne électrique 15 d'un contacteur 17 via un fil 16. Les balais sont par exemple au nombre de quatre. Les balais 13 et 14 viennent frotter sur les lames du collecteur 12 lorsque le rotor 2 est en rotation, permettant l'alimentation du bobinage 8 du rotor 2 par commutation du courant électrique dans des sections du rotor 2. Le nombre de balais 13, 14 dépend des applications, une ou plusieurs paires de balais 13, 14 pouvant être prévues.

Le démarreur 1 comporte en outre un ensemble lanceur 19 monté de manière coulissante sur un arbre d'entraînement 18 destiné à être entraîné en rotation autour de l'axe X par le rotor 2 lorsque le bobinage 8 de celui-ci est alimenté électriquement. Un ensemble réducteur de vitesse 20 est interposé entre l'arbre 2.1 du rotor 2 et l'arbre d'entraînement 18, de manière connue en soi. En variante, le démarreur 1 peut être du type 'Direct Drive', dépourvu de réducteur de vitesse. L'arbre 18 est donc distinct ou confondu avec l'arbre 2.1 du rotor 2.

L'ensemble lanceur 19 comporte un élément d'entraînement 21 destiné à s'engager sur un organe d'entraînement du moteur à combustion, non représenté. Cet organe d'entraînement est dans un mode de réalisation une poulie 21 recevant une courroie coopérant avec à une poulie du vilebrequin du moteur à combustion. L'élément d'entraînement 21 est dans un autre mode de réalisation un élément d'engrenage, le plus souvent un pignon, configuré pour entraîner en rotation une couronne dentée de démarrage reliée de manière rigide ou élastique au vilebrequin du moteur à combustion. L'ensemble lanceur 19 comprend, de manière connue, en outre un entraîneur 23 et une roue libre 22, par exemple à galets, intercalée entre l'entraîneur 23 et l'élément d'entraînement 21. L'entraîneur 23 présente un manchon doté à sa périphérie interne de cannelures de forme hélicoïdale venant en prise avec des cannelures complémentaires de forme hélicoïdale ménagée à la périphérie externe de l'arbre 18.

La roue libre 22 et l'entraîneur 23 sont configurés pour présenter une gorge 24 de réception de l'extrémité inférieure 25 d'une fourchette 27 d'actionnement de l'ensemble lanceur 19. Cette fourchette 27, de manière connue, présente un point intermédiaire de pivotement et une extrémité supérieure reliée à articulation à une tige attelée au noyau mobile d'un contacteur électromagnétique 17. Ce noyau mobile est destiné à agir sur un poussoir portant un contact mobile en forme de plaquette destinée à venir en contact avec la borne 15 reliée au balai 1 et avec une borne 29 reliée via un élément de liaison électrique, notamment un fil 30, à une alimentation électrique du véhicule, notamment une batterie. Pour plus de précisions sur le contacteur 17 et d'une manière générale sur le démarreur on se reportera par exemple au document US 7 375 606, sachant que la culasse du moteur électrique appartient au carter du démarreur.

Cette fourchette 27 est réalisée par exemple par moulage d'une matière plastique. La fourchette 27 est destinée à être actionnée par le noyau mobile du contacteur 17 pour déplacer l'ensemble lanceur 19 par rapport à l'arbre d'entraînement 18, suivant l'axe X, entre une première position dans laquelle le contact mobile du contacteur 17 est en contact avec les bornes 14, 29 et alimente électriquement le bobinage 8 du rotor 2 pour faire tourner le rotor 2 et entraîner l'organe d'entraînement du moteur à combustion par l'intermédiaire de son élément d'entraînement 21, et une deuxième position dans laquelle l'ensemble lanceur 19 est désengagé de l'organe d'entraînement du moteur à combustion et le contact mobile désengagé des bornes 14, 29.

La Figure 2 montre une vue de côté du rotor 2 selon l'invention. Ce rotor 2 monté sur l'arbre 2.1 porte le collecteur 12 du type dit « tambour ». Ce collecteur 12 présente les lames électriquement conductrices référencées 33 sur lesquelles viennent frotter les balais 13, 14. Le rotor 2 comporte un corps 34, appelé encore noyau, à la périphérie externe duquel sont installés les conducteurs 36 pour former le bobinage 8. Chaque conducteur 36 est ici revêtu d'une couche électriquement isolante, telle que de l'émail, et présente deux branches 36.1 reliées par un fond 36.2 de manière à former un U, les extrémités de ces conducteurs 36 étant soudées sur les lames 33. Les lames 33 et les conducteurs 36 sont dans un mode de réalisation en cuivre. On notera la présence d'une frette (non référencée) au niveau des extrémités des branches 36.1 pour éviter une désolidarisation des conducteurs 36 par rapport aux lames sous l'effet de la force centrifuge.

De manière connue, la structure aimantée 5 du stator 3 crée un champ magnétique qui se propage dans le rotor 2. Selon une caractéristique le corps 34 de forme annulaire est partiellement en matière plastique pour diminuer les pertes dans le circuit magnétique, appelées pertes de fer, c'est-à-dire les pertes par courant de Foucault et les pertes par hystérésis lorsque le rotor 2 tourne. Cela permet donc d'augmenter le rendement et le couple du moteur électrique et également de réduire les bruits, de faciliter la conception du rotor 2, de diminuer l'inertie du rotor 2 et de ménager notamment le moteur électrique du démarreur.

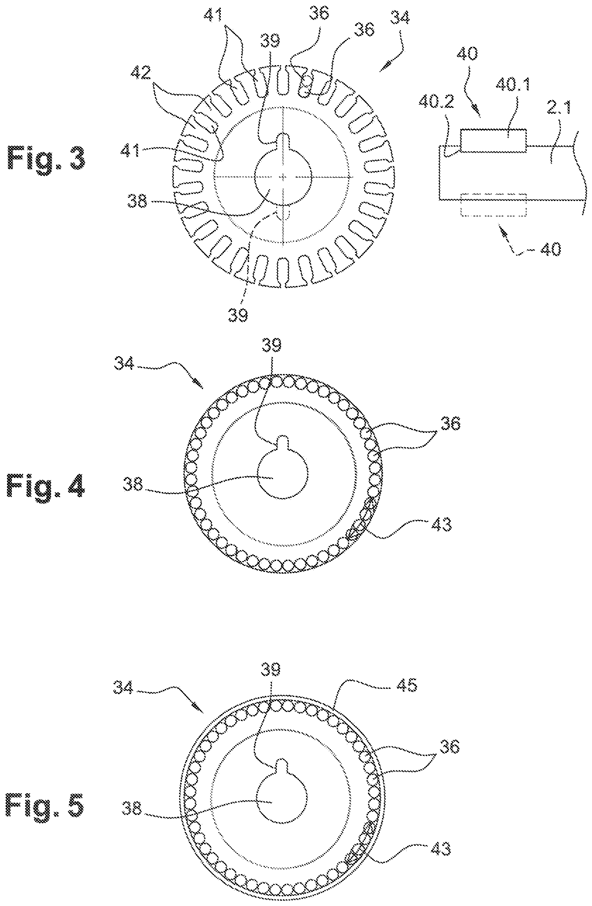

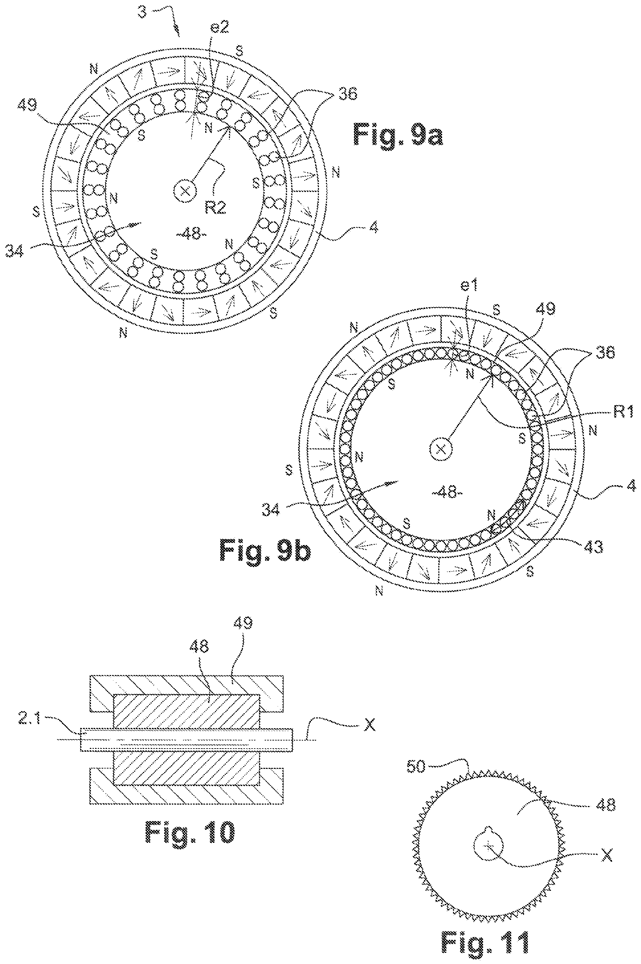

Dans une première réalisation de l'invention montrée sur la Figure 3, le corps 34 est, pour limiter les pertes de fer et diminuer au maximum l'inertie du rotor, réalisé partiellement en matière plastique en étant traversé centralement par l'arbre 2.1 métallique. Le corps 34 présente à sa périphérie interne un trou 38 avec une saillie 39. Le trou 38 est dédié au passage de l'arbre 2.1, une protubérance 40 associée à l'arbre 2.1 en métal pénétrant de manière complémentaire dans la saillie 39 pour entraînement en rotation du corps 34. Cette protubérance 40 est dans un mode de réalisation une clavette 40.1 intervenant entre une creusure 40.2 réalisée à la périphérie externe de l'arbre 2.1 et la saillie 39. En variante, la protubérance 40 appartient à l'arbre 2.1. En variante, il n'est pas prévu de saillie 39. L'arbre 2.1 étant cannelé comme visible partiellement à la figure 2, le corps 34 du rotor est emmanché à force sur l'arbre 2.1 pour être maintenu solidairement en rotation avec l'arbre 2.1. La protubérance 40 et les cannelures permettent également une liaison axiale du corps 34 avec l'arbre 2.1, sachant que les cannelures de l'arbre créent des sillons dans le corps 34 avec formation d'un bourrelet d'extrémité. Dans ce mode de réalisation, comme dans les figures 4 à 8a-8b, le corps 34 est en deux parties respectivement externe et interne référencées en 48 et 49 dans les figures 9a-9b et 10. Dans ces figures on a représenté un cercle séparant ces deux parties, sachant que selon une caractéristique la partie externe est en matière plastique surmoulée autour de la partie interne sous la forme d'un paquet de tôles. La saillie 39 appartient à la partie interne 48.

En variante, le corps 34 comporte au moins deux saillies 39 diamétralement opposées représentées en traits discontinus pour un bon équilibrage de l'arbre 2.1. Ces saillies 39 sont destinées à entrer en coopération de forme avec les protubérances 40 correspondantes portées par l'arbre 2.1. Dans tous les cas, on peut prévoir deux gorges dans l'arbre dans lesquelles pénètre la matière des extrémités du corps 34 pour bloquer axialement le corps 34 par rapport à l'arbre 2.1.

Suivant cette réalisation la partie externe en matière plastique du corps 34 présente à sa périphérie externe une alternance d'encoches 41 et de dents 42. Le rotor 2 présente donc des encoches 41 ménagées à la périphérie externe de son corps 34, et séparées par des dents 42 en matière plastique. Les conducteurs 36 pourront être insérés dans des encoches 41 sur deux couches : une couche supérieure et une couche inférieure. Suivant cette configuration, les branches des conducteurs 36 se situent à différentes distances radiales de l'axe de rotation du rotor 2.

En variante, comme représenté sur la Figure 4, tous les conducteurs 36 sont positionnés sur une seule couche 43 à la périphérie externe de la partie externe du corps 34 pour maximiser le moment des forces de Laplace produites par les conducteurs 36 et augmenter encore le couple du moteur électrique du démarreur.

Comme représenté sur la Figure 5, les conducteurs 36 pourront être plaqués contre la périphérie externe du corps 34 (C'est à dire à la périphérie externe de la partie externe) et maintenus radialement par une frette 45 pour éviter que les effets de la force centrifuge s'exercent sur ces conducteurs 36. Alternativement, les conducteurs 36 sont noyés dans le plastique du corps 34.

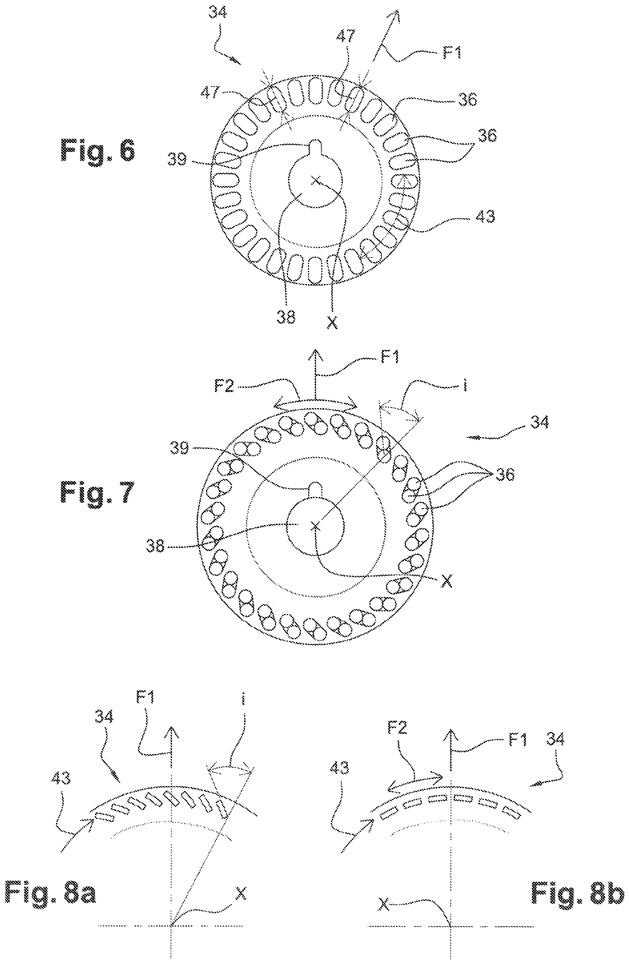

Les conducteurs 36 pourront avoir une section ronde comme représenté sur les Figures 3 à 5, ou une forme aplatie avec une section transversale de forme allongée, par exemple sensiblement rectangulaire, pour maximiser la surface d'échange thermique entre ceux-ci et le cas échéant la masse du rotor 2. Ces conducteurs 36 pourront être orientés suivant leur grande dimension 47 radialement suivant la direction F1, comme représenté sur la Figure 6.

En variante, comme représenté sur les Figures 7 et 8a, ces conducteurs 36 sur une ou deux couches pourront être positionnés en quinconce, les conducteurs 36 ayant alors une inclinaison i variable entre la direction radiale F1 et une direction orthoradiale F2 sensiblement perpendiculaire à la direction F1. A cet effet, le corps 34 du rotor 2 pourra être pourvu à sa périphérie d'encoches inclinées.

A l'extrême, comme représenté sur la Figure 8b, dans la direction orthoradiale F2, les régions conductrices aplaties sont situées côte à côte le plus loin possible de l'axe X de rotation pour matérialiser une nappe de courant à la périphérie du rotor 2.

Suivant une réalisation de l'invention montrée sur les Figures 9a-9b et 10, le corps 34 du rotor est, comme dans les figures précédentes, en deux parties à savoir une partie interne 48 feuilleté sous la forme d'un paquet de tôles et une partie 49 externe en plastique surmoulée autour du paquet 48 de tôles. Une telle réalisation permet d'avoir un bon couplage magnétique entre le stator inducteur 3 et l'induit 2, sans que l'induction ne soit trop élevée dans les zones où il peut y avoir des pertes fer lors de la rotation. La partie externe 49 est amagnétique et permet d'alléger le rotor, tandis que la partie interne 48 permet de réduire les courant de Foucault tout en ayant une bonne liaison mécanique entre l'arbre et le corps du rotor. Cette partie interne permet également le passage du flux magnétique. De préférence, pour retenir la partie 49 en plastique, le paquet 48 de tôles présente des cannelures 50 qui s'étendent longitudinalement sur sa périphérie externe comme cela est représenté sur la Figure 11. Les cannelures 50, ici en forme de dents sont ancrées dans l'ouverture centrale de la partie 49, cette ouverture constituant la périphérie interne de la partie 49. Le paquet 48 de tôles est lié en rotation à l'arbre 2.1 de manière classique à l'aide de cannelures notamment. Ces cannelures sont visibles de manière précitée à la figure 2.

On notera que la partie externe en matière plastique 49, dans laquelle sont noyés les conducteurs 36, présente dans le mode de réalisation de la figure 10 à chacune de ses extrémités axiales un rebord dirigé vers l'intérieur en direction de l'axe X. Le rebord est dans un mode de réalisation de forme annulaire. Le paquet de tôles est ainsi pris en sandwich entre les rebords en sorte que la partie 49 est bloquée axialement par le paquet de tôles formant entretoise entre les rebords. En variante le rebord est fractionné. Bien entendu les dispositions des figures 9a-9b à 11 sont applicables aux modes de réalisation des figures 3 à 8a-8b et 12 à 15 décrites ci-après.

Comme précédemment, les conducteurs 36 pourront être positionnés sur deux couches à la périphérie externe du corps 34 du rotor (cf Figure 9a) ou sur une seule couche 43 (cf Figure 9b). Suivant les applications, le rayon R1, R2 du paquet 48 de tôles varie, ce dernier étant plus grand lorsque les conducteurs 36 sont positionnés sur une seule couche (cf rayon R1) que lorsqu'ils sont positionnés sur deux couches (cf rayon R2). Dans un exemple, le diamètre du rotor étant de 60 mm, le paquet interne 48 de tôles présente un rayon R2 de l'ordre de 20 mm ; tandis que la partie externe 49 en matière plastique à deux couches présente une épaisseur e1 de l'ordre de 10 mm. Dans un autre exemple, le paquet 48 de tôles présente un rayon R1 de l'ordre de 25 mm ; tandis que la partie 49 en matière plastique à une seule couche présente une épaisseur e2 de l'ordre de 5 mm. Dans cet exemple le diamètre externe du stator, plus précisément de sa culasse métallique 52 est de 71 mm.

Le plastique utilisé pour la réalisation de la partie externe 49 du corps 34 du rotor 2 est une matière plastique thermodurcissable qui résiste bien à la chaleur. Cette matière plastique thermodurcissable est par exemple une matière plastique phénolique thermodurcissable, telle que de la bakélite en sorte que dans un mode de réalisation le corps 34 est dans la même matière que le support des lames du collecteur en étant, dans un mode de réalisation monobloc avec le corps. En variante, on utilise une matière plastique thermodurcissable à base de styrène. Dans un autre mode de réalisation on pourra utiliser une matière plastique de type PEEK (polyétheréthercétone) qui dispose d'une excellente tenue en température.

La matière plastique du corps 34 peut donc être la même matière plastique que celle du support des lames du collecteur ou différente de celle de ce support. Le corps 34 est dans un mode de réalisation monobloc avec ce support ou en variante distincte de ce support. On notera que le rotor avec un corps partiellement en matière plastique est plus léger et que cela est avantageux dans le cas ou le démarreur de véhicule automobile à moteur à combustion réalise la fonction « Stop Start » (Arrêt du moteur à combustion par exemple au feu rouge au feu rouge puis redémarrage du moteur à combustion). La matière plastique ménage le revêtement des conducteurs 36 car elle est moins agressive que les bavures d'un corps de rotor en paquet de tôles. Lorsque le corps 34 comporte un paquet interne de tôles cela permet de bien canaliser le champ magnétique notamment pour que le champ magnétique traverse radialement les conducteurs 36 de manière décrite ci-après.

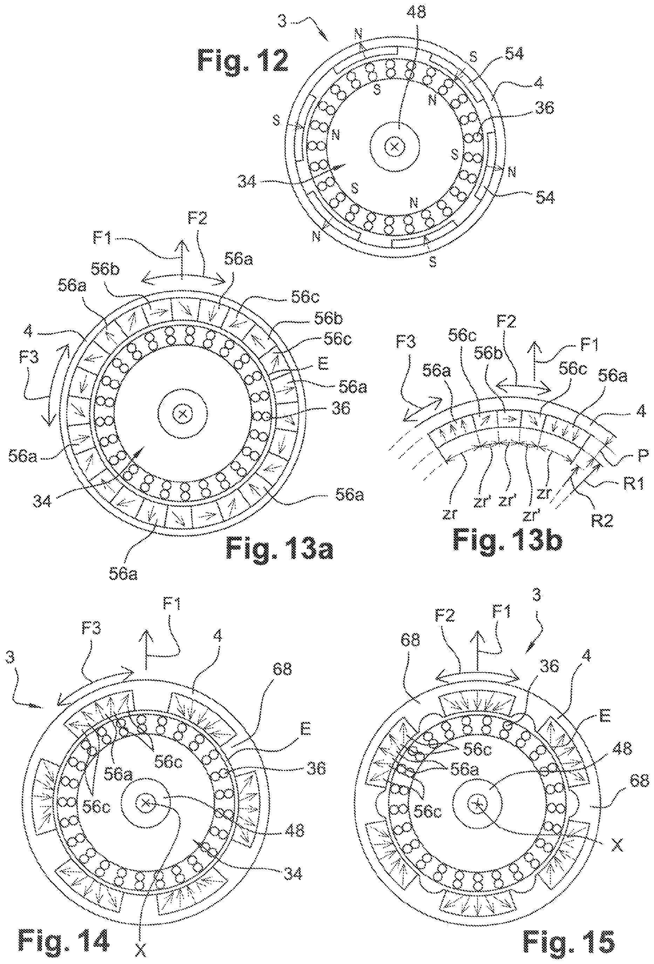

Comme représenté sur la Figure 12, l'inducteur 3 est constitué d'une culasse métallique 4 de fermeture de flux, par exemple en fer, entourant un ensemble d'aimants permanents 54 à aimantation radiale définissant les pôles de l'inducteur 3. Le rotor 2 et le stator 3 sont séparés l'un de l'autre par un entrefer E. Le stator 3 pourra comporter en outre de façon connue des shunts magnétiques consistant en des segments d'acier juxtaposés aux aimants 54. Les aimants 54 seront de préférence des aimants en terre rare, par exemple du type NdFeB (Néodyme, fer, bore) qui génèrent un champ magnétique très supérieur à celui des aimants de type ferrite. Ce type d'aimant permet ainsi de réduire l'épaisseur des aimants 54 utilisés, ce qui autorise l'augmentation du diamètre du rotor 2 pour permettre le positionnement des conducteurs 36 sur une même couche. Ainsi pour un même diamètre externe de culasse on peut augmenter le diamètre externe du rotor 2. Par exemple avec un diamètre externe de culasse de 71 mm, le diamètre externe du rotor peut être de manière précitée de 60 mm contre 57 mm dans l'art antérieur. On note que la proportion des épaisseurs d'aimants 54 et de culasse 4 est telle que l'épaisseur est plus faible côté aimants 54 et plus importante côté culasse 4.

L'invention pourra être mise en oeuvre avec un inducteur 3 doté d'une structure aimantée du type radiale (Figure 12) ou de type Halbach décrite dans le document FR A 2 910 192 ou de type Halbach modifié (Figures 13b à 15). La Figure 13a, tout comme les Figures 9a-9b précédentes, montre un stator 3 mettant en oeuvre une structure aimantée de type Halbach connue de l'homme du métier. Suivant cette configuration, entre deux pôles magnétiques consécutifs N et S de la structure aimantée, l'angle entre la direction d'aimantation de la structure et la direction radiale F1 varie de manière monotone et discontinue, sans rebroussement angulaire. Ce document montre également (figures 6 à 23) des modes de fixation des aimants, notamment à l'aide de pattes. Pour plus de précisions on se reportera à ce document.

Plus précisément (Figure 12), à l'intérieur de la culasse 4 de fermeture de flux, le stator 2 comporte des aimants 56a présentant une aimantation de direction radiale F1 définissant les six pôles de la machine, dont trois pôles nord N et trois pôles sud S en regard de l'intérieur du rotor 2. Les pôles sont alternés circonférentiellement.

Dans le mode de réalisation des figures 9a, 9b et 13a, entre deux aimants 56a consécutifs, sont disposés trois aimants permanents dont :
- un aimant 56b ayant une direction d'aimantation sensiblement orthoradiale F2 perpendiculaire à la direction F1, et
- de part et d'autre de cet aimant 56b, deux aimants 56c ayant une direction d'aimantation différente des directions radiale et orthoradiale. Dans l'exemple considéré, la direction d'aimantation est sensiblement uniforme au sein de chaque aimant et forme avec la direction radiale F1 un angle d'environ 45°.

Une telle structure permet de concentrer l'énergie magnétique vers l'entrefer E, entre le rotor 2 et le stator 3, ce qui correspond à une réduction significative de l'induction à l'extérieur de la structure aimantée et une augmentation significative de l'induction vers l'intérieur où se trouve l'induit.

L'invention pourra aussi être mise en oeuvre avec un stator 3 présentant une structure de Halbach modifiée montrée sur la Figure 13b.

Dans cette structure, les aimants 56a ayant une direction d'aimantation radiale occupent une région radiale Zr plus étendue que celles Zr' occupées par les autres aimants 56b, 56c ayant une direction d'aimantation non radiale et assurant la transition de la direction du champ entre deux régions radiales 56a successives.

Dans cet exemple de réalisation, le nombre de transitions angulaires entre deux aimants 56a présentant une direction d'aimantation radiale successifs est égal à 3 avec un aimant 56b présentant une direction d'aimantation orthoradiale et des aimants 56c situés de part et d'autre présentant une direction d'aimantation autre que radiale ou orthoradiale. La direction d'aimantation forme avec la direction radiale F1 un angle d'environ 45°. En variante, le nombre de transitions angulaires entre deux pôles consécutifs de la machine pourrait être différent de 3.

Il en résulte un effet Halbach localisé de transition entre les régions 56a d'aimantation radiale auquel se superpose un système d'aimantation radiale qui permet d'optimiser le passage de flux vers les conducteurs 36 du rotor 2 de la machine électrique.

Les aimants permanents présentent des dimensions identiques de sorte que la structure aimantée a une épaisseur P mesurée suivant la direction F1 sensiblement constante lorsque l'on se déplace sur la circonférence F3. Les aimants 56a-56c sont de préférence de type NdFeB, ce qui permet de diminuer de moitié l'épaisseur utile d'un inducteur Halbach classique. Il est ainsi possible d'augmenter le diamètre du rotor 2 pour passer du rayon R2 au rayon R1, afin de compenser le faible couple électromagnétique moteur dû à la suppression du fer dans le rotor 2.

Chaque aimant 56a-56c présente ici une seule direction d'aimantation particulière, ces aimants étant avantageusement anisotropes. Alternativement, on utilise des aimants avec des propriétés isotropes présentant chacun plusieurs directions d'aimantation, la proportion angulaire Zr, Zr' des régions aimantées étant conservée.

En variante, pour augmenter l'inductance d'induit, il est possible d'intercaler radialement des pièces 68 d'acier interpolaires entre deux pôles successifs du stator 3. Les zones de transition magnétiques 56c entre deux pôles successifs se situent alors de part et d'autre des pièces interpolaires 68. Les pièces interpolaires 68 sont positionnées dans un exemple à la place des régions d'aimantation orthoradiales 56b d'une structure Halbach.

Les pièces interpolaires présentent une forme parallélépipédique mais elles pourraient alternativement présenter une forme d'arche comme cela est montré sur la Figure 15.

Une telle configuration permet également de compenser le niveau trop faible de couple électromagnétique moteur dû par exemple à la suppression du fer dans le rotor 2.

Bien entendu on peut utiliser d'autres aimants en terre rare, par exemple à base de Samarium Cobalt.

On appréciera que lorsque le corps 34 présente un paquet de tôles internes 48 que le champ magnétique est dirigé perpendiculairement aux conducteurs. Dans les réalisations du type Halbach modifié une partie du flux passe par la culasse 4, alors qu'avec un inducteur Halbach classique il ne passe quasiment pas de flux par la culasse 4.

Bien entendu la présente invention n'est pas limitée aux exemples de réalisation décrits.

Toutes les combinaisons sont possibles. Ainsi les cannelures 50 de la figure 11 peuvent être remplacées par des protubérances du type de celles intervenant entre l'arbre 2.1 et la partie interne 48. Ces protubérances peuvent donc consister en des pattes saillantes issues de la périphérie externe de la partie interne 48. Ces pattes sont dans un mode de réalisation en forme de T. En variante ces pattes sont configurées pour délimiter des mortaises appartenant à un assemblage à queue d'aronde. En variante la partie 48 présente à sa périphérie externe des évidements, tels que des encoches du type semi-fermées pour retenir la périphérie interne de la partie externe 49, la matière plastique pénétrant dans les évidements. D'une manière générale la réalisation de la partie interne 48 sous la forme d'un paquet de tôles permet de réaliser par découpe des protubérances ou des évidements de formes diverses pour ancrage de la périphérie interne partie externe 49 à la périphérie externe partie interne 48. La partie interne 48 comporte donc de préférence des moyens d'ancrage pour retenir la partie externe 49

Dans tous les cas la partie interne 48 présente un trou central pour passage de l'arbre 2.1. L'assemblage de la partie 48 avec l'arbre étant réalisé de manière précit2.

De préférence la partie externe est de faible épaisseur pour un meilleur passage du flux magnétique.

## Revendications

1. Machine électrique tournante comportant :
- un rotor (2) monté sur un arbre (2.1) en métal comportant un corps (34) et des conducteurs (36) formant un bobinage dudit rotor (2),
- un stator (3) positionné autour du rotor (2) comprenant une structure aimantée à aimantation permanente s'étendant suivant une circonférence du stator (3), le rotor (2) et le stator (3) étant séparés par un entrefer (E), **caractérisée en ce que**
- le corps (34) du rotor (2) est réalisé partiellement en matière plastique et comporte une partie interne (48) sous la forme d'un paquet de tôles et une partie externe (49) en plastique surmoulée autour du paquet (48) de tôles et **en ce que** les conducteurs (36) sont noyés dans le plastique du corps (34) du rotor.

2. Machine électrique tournante comportant :
- un rotor (2) monté sur un arbre (2.1) en métal comportant un corps (34) à la périphérie externe duquel sont installés des conducteurs (36) formant un bobinage dudit rotor (2),
- un stator (3) positionné autour du rotor (2) comprenant une structure aimantée à aimantation permanente s'étendant suivant une circonférence du stator (3), le rotor (2) et le stator (3) étant séparés par un entrefer (E), **caractérisée en ce que**
- le corps (34) du rotor (2) est réalisé partiellement en matière plastique et comporte une partie interne (48) sous la forme d'un paquet de tôles et une partie externe (49) en plastique surmoulée autour du paquet (48) de tôles, lesdits conducteurs étant installés à la périphérie externe de ladite partie externe.

3. Machine électrique tournante comportant :
- un rotor (2) monté sur un arbre (2.1) en métal comportant un corps (34) et des conducteurs (36) formant un bobinage dudit rotor (2),
- un stator (3) positionné autour du rotor (2) comprenant une structure aimantée à aimantation permanente s'étendant suivant une circonférence du stator (3), le rotor (2) et le stator (3) étant séparés par un entrefer (E), **caractérisée en ce que**
- le corps (34) du rotor (2) est réalisé partiellement en matière plastique et comporte une partie interne (48) sous la forme d'un paquet de tôles et une partie externe (49) en plastique surmoulée autour du paquet (48) de tôles, et
**en ce que** lesdits conducteurs sont insérés dans des encoches ménagées à la périphérie externe et séparées par des dents en matière plastique.

4. Machine selon la revendication 3, **caractérisé en ce que** le corps (34) du rotor est réalisé en matière plastique dans la région des dents qui séparent les encoches (41) près de l'entrefer (E), à la périphérie externe du rotor (2).

5. Machine selon la revendication 1 à 4, **caractérisée en ce que** le paquet (48) de tôles comporte à sa périphérie externe des moyens d'ancrage, tels que des cannelures (50), pour retenir la partie externe (49) en plastique.

6. Machine selon l'une des revendications 1 à 5, **caractérisée en ce que** la partie externe en matière plastique (49) présente à chacune de ses extrémités axiales un rebord dirigé vers l'intérieur en direction de l'axe (X) du rotor (2), le paquet interne de tôles (48) étant pris en sandwich entre les rebords en sorte que la partie externe (49) est bloquée axialement par le paquet de tôles formant entretoise entre les rebords.

7. Machine selon l'une des revendications 1 à 6, **caractérisée en ce que** les conducteurs (50) sont positionnés sur une même couche.

8. Machine selon l'une des revendications 1 à 7, **caractérisée en ce que** les conducteurs (36) présentent une section transversale de forme allongée, par exemple sensiblement rectangulaire.

9. Machine selon la revendication 8, **caractérisée en ce que** les sections des conducteurs (36) sont orientées radialement suivant leur grande dimension (47).

10. Machine selon la revendication 9, **caractérisée en ce que** les conducteurs (36) sont positionnés en quinconce à la périphérie externe du rotor (2).

11. Machine selon la revendication 8, **caractérisée en ce que** les conducteurs sont situés côte à côte le plus loin possible de l'axe de rotation pour matérialiser une nappe de courant à la périphérie du rotor (2).

12. Machine selon l'une des revendications 1 à 11, **caractérisée en ce que** le plastique utilisé pour la réalisation du rotor est un plastique de type PEEK (polyétheréthercétone).

13. Machine selon l'une des revendications 1 à 12, **caractérisée en ce que** le stator (3) est constitué d'une culasse (4) de fermeture de flux et d'un ensemble d'aimants permanents (54, 56) réalisés en terre rare ayant une direction d'aimantation radiale.

14. Machine selon l'une des revendications 1 à 12, **caractérisée en ce que** le stator (3) comporte :
- des régions aimantées (56a) présentant une aimantation de direction radiale (F1) définissant les pôles de la machine,
- des régions (56b) de transition magnétique présentant une direction d'aimantation autre que radiale situées entre deux régions (56a) d'aimantation radiale,
- les régions (56b) d'aimantation radiale occupant une zone radiale (Zr) plus étendue que les zones radiales (Zr') occupées par les régions (56b, 56c) d'aimantation autre que radiale.

15. Machine électrique selon la revendication 14, **caractérisée en ce que**, entre deux aimants (56a) présentant une aimantation radiale consécutifs, les régions d'aimantation autre que radiale sont constituées par :
- un région (56b) d'aimantation sensiblement orthoradiale (F2), et
- de part et d'autre de cette région, deux régions (56c) ayant une direction d'aimantation différente des directions radiale et orthoradiale, cette direction d'aimantation formant par exemple avec la direction radiale (F1) un angle d'environ 45°.

16. Machine selon la revendication 14 ou 15, **caractérisée en ce que** le stator (3) comporte en outre des pièces (68) d'acier interpolaires intercalées radialement entre deux pôles successifs du stator (3).

17. Machine selon la revendication 16, **caractérisé en ce que** les pièces (68) d'acier interpolaires se substituent aux régions (56b) d'aimantation orthoradiale.

18. Démarreur équipé d'une machine électrique selon l'une des revendications 1 à 5.

## Patentansprüche

1. Elektrische Drehmaschine, umfassend:
- einen Rotor (2), der auf einer Welle (2.1) aus Metall montiert ist, umfassend einen Körper (34) und Leiter (36), die eine Wicklung des Rotors (2) bilden,
- einen Stator (3), der um den Rotor (2) angeordnet ist, umfassend eine Magnetstruktur mit Dauermagnetisierung, die sich in einer Umfangsrichtung des Stators (3) erstreckt, wobei der Rotor (2) und der Stator (3) durch einen Luftspalt (E) getrennt sind,
**dadurch gekennzeichnet, dass**
- der Körper (34) des Rotors (2) teilweise aus Kunststoff hergestellt ist und einen inneren Teil (48) in Form eines Blechpakets und einen äußeren Teil (49) aus Kunststoff, der um das Blechpaket (48) herum geformt ist, umfasst, und dass die Leiter (36) in den Kunststoff des Körpers (34) des Rotors eingelassen sind.

2. Elektrische Drehmaschine, umfassend:
- einen Rotor (2), der auf einer Welle (2.1) aus Metall montiert ist, umfassend einen Körper (34), an dessen äußerer Peripherie Leiter (36) installiert sind, die eine Wicklung des Rotors (2) bilden,
- einen Stator (3), der um den Rotor (2) angeordnet ist, umfassend eine Magnetstruktur mit Dauermagnetisierung, die sich in einer Umfangsrichtung des Stators (3) erstreckt, wobei der Rotor (2) und der Stator (3) durch einen Luftspalt (E) getrennt sind,
**dadurch gekennzeichnet, dass**
- der Körper (34) des Rotors (2) teilweise aus Kunststoff hergestellt ist und einen inneren Teil (48) in Form eines Blechpakets und einen äußeren Teil (49) aus Kunststoff, der um das Blechpaket (48) herum geformt ist, umfasst, wobei die Leiter an der äußeren Peripherie des äußeren Teils installiert sind.

3. Elektrische Drehmaschine, umfassend:
- einen Rotor (2), der auf einer Welle (2.1) aus Metall montiert ist, umfassend einen Körper (34) und Leiter (36), die eine Wicklung des Rotors (2) bilden,
- einen Stator (3), der um den Rotor (2) angeordnet ist, umfassend eine Magnetstruktur mit Dauermagnetisierung, die sich in einer Umfangsrichtung des Stators (3) erstreckt, wobei der Rotor (2) und der Stator (3) durch einen Luftspalt (E) getrennt sind,
**dadurch gekennzeichnet, dass**
- der Körper (34) des Rotors (2) teilweise aus Kunststoff hergestellt ist und einen inneren Teil (48) in Form eines Blechpakets und einen äußeren Teil (49) aus Kunststoff, der um das Blechpaket (48) herum geformt ist, umfasst, und
- dass die Leiter in Kerben eingesetzt sind, die an der äußeren Peripherie vorgesehen und durch Zähne aus Kunststoff getrennt sind.

4. Maschine nach Anspruch 3, **dadurch gekennzeichnet, dass** der Körper (34) des Rotors aus Kunststoff im Bereich der Zähne, die die Kerben (41) in der Nähe des Luftspalts (E) an der äußeren Peripherie des Rotors (2) trennen, hergestellt ist.

5. Maschine nach Anspruch 1 bis 4, **dadurch gekennzeichnet, dass** das Blechpaket (48) an seiner äußeren Peripherie Verankerungsmittel, wie Rillen (50) umfasst, um den äußeren Teil (49) aus Kunststoff zu halten.

6. Maschine nach einem der Ansprüche 1 bis 5, **dadurch gekennzeichnet, dass** der äußere Teil aus Kunststoff (49) an jedem seiner axialen Enden einen nach innen in Richtung der Achse (X) des Rotors (2) gerichteten Rand aufweist, wobei das innere Blechpaket (48) zwischen den Rändern zwischengefügt ist, so dass der äußere Teil (49) axial durch das Blechpaket, das eine Querstrebe zwischen den Rändern bildet, festgestellt ist.

7. Maschine nach einem der Ansprüche 1 bis 6, **dadurch gekennzeichnet, dass** die Leiter (50) auf einer selben Schicht angeordnet sind.

8. Maschine nach einem der Ansprüche 1 bis 7, **dadurch gekennzeichnet, dass** die Leiter (36) einen Querschnitt von länglicher, beispielsweise im Wesentlichen rechteckiger, Form aufweisen.

9. Maschine nach Anspruch 8, **dadurch gekennzeichnet, dass** die Querschnitte der Leiter (36) radial entlang ihrer großen Abmessung (47) ausgerichtet sind.

10. Maschine nach Anspruch 9, **dadurch gekennzeichnet, dass** die Leiter (36) an der äußeren Peripherie des Rotors (2) versetzt angeordnet sind.

11. Maschine nach Anspruch 8, **dadurch gekennzeichnet, dass** die Leiter nebeneinander möglichst weit von der Drehachse entfernt angeordnet sind, um eine Strombahn an der Peripherie des Rotors (2) darzustellen.

12. Maschine nach einem der Ansprüche 1 bis 11, **dadurch gekennzeichnet, dass** der für die Herstellung des Rotors verwendete Kunststoff ein Kunststoff des Typs PEEK (Polyetheretherketon) ist.

13. Maschine nach einem der Ansprüche 1 bis 12, **dadurch gekennzeichnet, dass** der Stator (3) von einem Joch (4) zum Schließen des Flusses und einer Gesamtheit von Dauermagneten (54, 56) gebildet ist, die aus seltener Erde hergestellt sind und eine radiale Magnetisierungsrichtung aufweisen.

14. Maschine nach einem der Ansprüche 1 bis 12, **dadurch gekennzeichnet, dass** der Stator (3) umfasst:
- magnetisierte Bereiche (56a), die eine Magnetisierung in radialer Richtung (F1) aufweisen, die die Pole der Maschine definieren,
- magnetische Übergangsbereiche (56b), die eine andere als radiale Magnetisierungsrichtung aufweisen und sich zwischen zwei Bereichen (56a) mit radialer Magnetisierung befinden,
- wobei die Bereiche (56b) mit radialer Magnetisierung eine weitere radiale Zone (Zr) als die radialen Zonen (Zr'), die von den Bereichen (56b, 56c) mit einer anderen als radialen Magnetisierung eingenommen sind, einnehmen.

15. Elektrische Maschine nach Anspruch 14, **dadurch gekennzeichnet, dass** zwischen zwei aufeinanderfolgenden Magneten (56a) mit einer radialen Magnetisierung die Bereiche mit einer anderen als radialen Magnetisierung gebildet sind von:
- einem Bereich (56b) mit im Wesentlichen orthoradialer Magnetisierung (F2), und
- beiderseits dieses Bereichs zwei Bereichen (56c) mit einer anderen Magnetisierungsrichtung als die radiale und orthoradiale Richtung, wobei diese Magnetisierungsrichtung beispielsweise mit der radialen Richtung (F1) einen Winkel von ungefähr 45° bildet.

16. Maschine nach Anspruch 14 oder 15, **dadurch gekennzeichnet, dass** der Stator (3) ferner interpolare Stahlteile (68) umfasst, die radial zwischen zwei aufeinanderfolgenden Polen des Stators (3) zwischengefügt sind.

17. Maschine nach Anspruch 16, **dadurch gekennzeichnet, dass** die interpolaren Stahlteile (68) an die Stelle der Bereiche (56b) mit orthoradialer Magnetisierung treten.

18. Starter, der mit einer elektrischen Maschine nach einem der Ansprüche 1 bis 5 ausgestattet ist.

## Claims

1. Rotating electric machine including:
- a rotor (2) mounted on a shaft (2.1) in metal including a body (34) and conductors (36) forming a winding of said rotor (2),
- a stator (3) positioned around the rotor (2), comprising a magnetized structure with permanent magnetization extending around a circumference of the stator (3), the rotor (2) and the stator (3) being separated by an air gap (E),
**characterized in that**
- the body (34) of the rotor (2) is made in part in plastic material and includes an inner part (48) in the form of a package of metal sheets, and an outer part (49) in plastic over-moulded around the package (48) of metal sheets, and **in that** the conductors (36) are buried in the plastic of the rotor body (34).

2. Rotating electric machine including:
- a rotor (2) mounted on a shaft (2.1) in metal including a body (34), at the outer periphery of which conductors (36) forming a winding of said rotor (2) are installed,
- a stator (3) positioned around the rotor (2), comprising a magnetized structure with permanent magnetization extending around a circumference of the stator (3), the rotor (2) and the stator (3) being separated by an air gap (E),
**characterized in that**
- the body (34) of the rotor (2) is made in part in plastic material and includes an inner part (48) in the form of a package of metal sheets, and an outer part (49) in plastic over-moulded around the package (48) of metal sheets, said conductors being installed at the outer periphery of said outer part.

3. Rotating electric machine including:
- a rotor (2) mounted on a shaft (2.1) in metal including a body (34) and conductors (36) forming a winding of said rotor (2),
- a stator (3) positioned around the rotor (2), comprising a magnetized structure with permanent magnetization extending around a circumference of the stator (3), the rotor (2) and the stator (3) being separated by an air gap (E),
**characterized in that**
- the body (34) of the rotor (2) is made in part in plastic material and includes an inner part (48) in the form of a package of metal sheets, and an outer part (49) in plastic over-moulded around the package (48) of metal sheets, and
**in that** said conductors are inserted in slots arranged at the outer periphery and separated by teeth in plastic material.

4. Machine according to Claim 3, **characterized in that** the body (34) of the rotor is made in plastic material in the region of the teeth that separate the slots (41) near the air gap (E), at the outer periphery of the rotor (2).

5. Machine according to Claim 1 to 4, **characterized in that** the package (48) of metal sheets includes, at its outer periphery, anchoring means, such as splines (50) for retaining the outer part (49) in plastic.

6. Machine according to one of Claims 1 to 5, **characterized in that** the outer part in plastic material (49) has, at each of its axial ends, a shoulder directed inwards in the direction of the axis (X) of the rotor (2), the inner package of metal sheets (48) being sandwiched between the shoulders so that the outer part (49) is axially blocked by the package of metal sheets forming a spacer between the shoulders.

7. Machine according to one of Claims 1 to 6, **characterized in that** the conductors (50) are positioned over a single layer.

8. Machine according to one of Claims 1 to 7, **characterized in that** the conductors (36) have a cross-section of an elongated shape, for example, substantially rectangular.

9. Machine according to Claim 8, **characterized in that** the cross-sections of the conductors (36) are radially orientated along their large dimension (47).

10. Machine according to Claim 9, **characterized in that** the conductors (36) are positioned in quincunx at the outer periphery of the rotor (2).

11. Machine according to Claim 8, **characterized in that** the conductors are situated side-by-side as far away as possible from the axis of rotation in order to create a current sheet at the periphery of the rotor (2).

12. Machine according to one of Claims 1 to 11, **characterized in that** the plastic used to make the rotor is a plastic of the PEEK type (polyetheretherketone).

13. Machine according to one of Claims 1 to 12, **characterized in that** the stator (3) is comprised of a housing (4) for flux closure and of a set of permanent magnets (54, 56) made in rare earth, having a radial direction of magnetization.

14. Machine according to one of Claims 1 to 12, **characterized in that** the stator (3) includes:
- magnetized regions (56a) having a magnetization of radial direction (F1) defining the poles of the machine,
- regions (56b) of magnetic transition having a direction of magnetization other than radial, said regions being situated between two regions (56a) of radial magnetization,
- the regions (56b) of radial magnetization occupying a radial zone (Zr) more extended than the radial zones (Zr') occupied by the regions (56b, 56c) of magnetization other than radial.

15. Electric machine according to Claim 14, **characterized in that**, between two consecutive magnets (56a) having radial magnetization, the regions of magnetization other than radial are comprised of:
- a region (56b) of substantially ortho-radial magnetization (F2), and
- on either side of this region, two regions (56c) having a direction of magnetization different from the radial and ortho-radial directions, this direction of magnetization forming, for example with the radial direction (F1), an angle of approximately 45º.

16. Machine according to Claim 14 or 15, **characterized in that** the stator (3) furthermore includes steel parts (68) between the poles, radially interleaved between two successive poles of the stator (3).

17. Machine according to Claim 16, **characterized in that** the steel parts (68) between the poles are substitutes for the regions (56b) of ortho-radial magnetization.

18. Starter motor equipped with an electric machine according to one of Claims 1 to 5.
